(19) Europäisches Patentamt
European Patent Office
Office européen des brevets

(11) **EP 4 276 743 A1**

(12) **EUROPEAN PATENT APPLICATION**

(43) Date of publication:
**15.11.2023 Bulletin 2023/46**

(21) Application number: **22305713.4**

(22) Date of filing: **13.05.2022**

(51) International Patent Classification (IPC):
***G06T 7/00*** *(2017.01)*

(52) Cooperative Patent Classification (CPC):
**G06T 7/001;** G06T 2207/20084; G06T 2207/30164

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Framatome
92400 Courbevoie (FR)**

(72) Inventors:
• **PETIT, Christophe
69003 LYON (FR)**
• **HASSELBACH, Artur
96052 BAMBERG (DE)**
• **FLORENTINO, Rachel Joy
92500 RUEIL MALMAISON (FR)**

(74) Representative: **Lavoix
2, place d'Estienne d'Orves
75441 Paris Cedex 09 (FR)**

(54) **METHOD AND SYSTEM FOR INSPECTING AN OBJECT, SUCH AS A NUCLEAR REACTOR COMPONENT, E.G. A NUCLEAR FUEL ASSEMBLY**

(57) The inspection method is for detecting a defect on an object, in particular a nuclear reactor component, e.g. a nuclear fuel assembly, the inspection method comprising the steps of:
- obtaining a first image (F1) of a region of interest of the nuclear component;
- inputting the first image (F1) to an autoencoder (34) configured for encoding the first image (F1) into an image code corresponding to a compression of the first image (F1) and decoding the image code to output a second image (F2); and
- comparing the first image (F1) with the second image (F2) for detecting the representation of a defect in the first image (F1).

Obtaining a first image of the a region of interest of an object, e.g. a nuclear fuel assembly

↓

Calculating a second image with an autoencoder

↓

Comparing the first image and the second image to dectect the representation of a defect

**FIG.4**

EP 4 276 743 A1

## Description

The present invention relates to the field of detection of defects of an object, for example a nuclear reactor component, e.g. a nuclear fuel assembly.

A nuclear fuel assembly for a pressurized water nuclear reactor generally comprises a bundle of nuclear fuel rods extending along a longitudinal axis and a support skeleton configured to support the nuclear fuel rods.

The support skeleton comprises two end pieces spaced apart along the longitudinal axis, a plurality of guide tubes extending along the longitudinal axis and connecting the end pieces to each other and spacer grids distributed along the guide tubes, each spacer grid being fixedly attached to the guide tubes and being configured to support the nuclear fuel rods and maintain them in a transversely spaced relationship.

Each spacer grid has cells, the fuel rods extending through the cells of the spacer grid, each cell receiving a respective fuel rod. Each cell is provided on its internal surfaces with elastically deformable springs and/or rigid bosses configured to maintain the nuclear fuel rod extending through this cell transversely and longitudinally.

In operation, a plurality of nuclear fuel assemblies is arranged side-by-side in a nuclear reactor vessel with their longitudinal axes extending vertically, thus forming the core of the nuclear reactor. A coolant fluid flows vertically at high velocity through the nuclear fuel assemblies for moderating the nuclear reaction and retrieving heat from the nuclear fuel assemblies.

Debris present in the coolant fluid may be caught in a nuclear fuel assembly and cause damages to the nuclear fuel assembly.

Damages mays also be caused to a nuclear fuel assembly during handling of the nuclear fuel assembly, in particular upon insertion of the nuclear fuel assembly in the reactor core or extraction of the nuclear fuel assembly from the reactor core.

During maintenance operations on a nuclear reactor, a nuclear fuel assembly may be inspected for detecting defects, such as debris caught in a nuclear fuel assembly and/or damages caused to the nuclear fuel assembly.

During such maintenance operations, the nuclear fuel assembly is kept underwater in a pool of the nuclear plant and the inspection of the nuclear fuel assembly has to be performed remotely and underwater, which makes the maintenance operations more difficult.

The inspection may be performed by capturing images of regions of interest of the nuclear fuel assembly and analysis of the images by a human operator.

However, the quality of the images taken remotely and in a difficult environment, namely underwater and with low light, renders the human interpretation of the images difficult and prone to errors, leading potentially to undetected defects.

One of the aims of the invention is to propose an inspection method for detecting a defect on an object, for example a nuclear reactor component, in particular a nuclear fuel assembly, the inspection method be easy to perform and efficient.

To this aim, the invention proposes an inspection method for detecting a defect on an object, in particular a nuclear reactor component, e.g. a nuclear fuel assembly, the inspection method comprising the steps of:

- obtaining a first image of a region of interest of the nuclear component;
- inputting the first image to an autoencoder configured for encoding the first image into an image code corresponding to a compression of the first image and decoding the image code to output a second image; and
- comparing the first image with the second image for detecting the representation of a defect in the first image.

The inspection method based on the processing of a first image of a region of interest of the object under inspection using an autoencoder to produce a second image and the comparison of the first image with the second image allows an efficient detection of defects in a simple manner.

Defects detected by implementing the inspection method comprise for example a debris caught on the object and/or a damage caused to the object. Damages comprises for example deformation of the object or removed material on the object, due e.g. to an impact onto the object.

In particular, in the case of a nuclear fuel assembly, a defect is for example a debris caught in the nuclear fuel assembly or a damage caused to any part of the nuclear fuel assembly, e.g. a damage caused to a nuclear fuel rod and/or a spacer grid.

In specific embodiments, the inspection method comprises one or several of the following optional features, taken individually or in any technically feasible combination:

- the comparison of the first image with the second image is performed by image differencing;
- image differencing is performed with calculating a correlation coefficient between the first image and the second image;
- the inspection method comprises the generation of a correlation image in which each pixel corresponds to a pixel of the first image and is assigned a color indicative of a correlation between the pixel of the first image and the corresponding pixel of the second image;
- the inspection method comprises the identification of a potential representation of a defect in each region of the first image for which the correlation coefficient is low;
- the inspection method comprises the identification of a potential representation of a defect in each region of the first image for which the correlation coefficient is below a correlation threshold;
- the step of obtaining the first image comprises capturing the first image using an image capture device.

The invention also relates to an electronic inspection system configured to perform the inspection method as recited above.

The invention also relates to a computer program comprising instructions which, when the program is executed by a computer, cause the computer to carry out the inspection method as recited above.

The invention also relates to the use of an autoencoder for detecting representations of a defect on a first image of a region of interest of an object, in particular a nuclear reactor component, e.g. a nuclear fuel assembly, by comparing the first image with a second image calculated by the autoencoder based on the first image.

The invention and its advantages will be better understood upon reading the following description that is given solely by way of non-limiting example and with reference to the appended drawings, on which:

- Figure 1 is an elevation side view of a nuclear fuel assembly;
- Figure 2 is a diagrammatical view of an electronic inspection system configured for the detection of defects on a nuclear fuel assembly;
- Figure 3 illustrates an autoencoder of the electronic inspection system of Figure 2, the autoencoder being configured for converting a first image into a second image;
- Figure 4 is a block diagram illustrating an inspection method for the inspection of a nuclear fuel assembly, the inspection method being operable with the electronic inspection system of Figure 2; and
- Figure 5 illustrates a first image of a nuclear fuel assembly, a second image resulting from the processing of the first image by the autoencoder of Figure 3 and a third image resulting from the comparison of the first image and the second image.

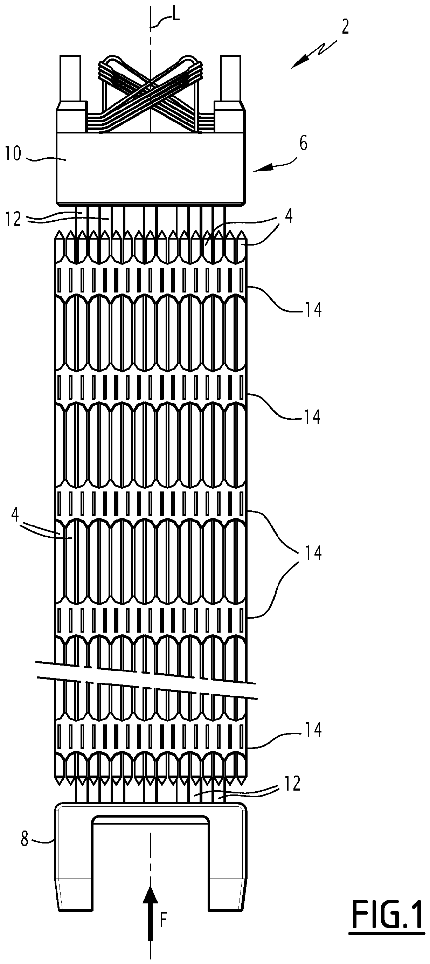

The nuclear fuel assembly 2 illustrated on Figure 1 comprises a bundle of nuclear fuel rods 4 and a support skeleton 6 configured to support the nuclear fuel rods 4.

The nuclear fuel rods 4 extend parallel relative to each other and to a longitudinal axis L.

The longitudinal axis L extends vertically when the nuclear fuel assembly 2 is placed in a core of a nuclear reactor.

In operation, a coolant fluid flows vertically from the bottom to the top through the nuclear fuel assembly 2 as shown by the arrow F in Figure 1.

In the remainder of the description, the terms "vertical", "horizontal", "top", "bottom", "longitudinal", "transverse", "upper" and "lower" are to be understood with reference to the position of the nuclear fuel assembly 2 in the core of the nuclear reactor, the longitudinal axis L being substantially vertical.

The support skeleton 6 comprises a lower end piece 8, an upper end piece 10, a plurality of guide tubes 12 and a plurality of spacer grids 14.

The lower end piece 8 and the upper end piece 10 are spaced apart along the longitudinal axis L.

The guide tubes 12 extend along the longitudinal axis L and connect the lower end piece 8 and the upper end piece 10 to each other, with maintaining the spacing between the lower end piece 8 and the upper end piece 10.

The nuclear fuel rods 4 are accommodated between the lower end piece 8 and the upper end piece 10.

Each guide tube 12 is open at its upper end to allow for the insertion of a control rod (not shown) into the interior of the guide tube 12, through the upper end piece 10. Such a control rod provides the ability to control the reactivity of the nuclear reactor core.

The spacer grids 14 are distributed along the guide tubes 12 while being spaced apart from one another along the longitudinal axis L. Each spacer grid 14 is rigidly attached to the guide tubes 12, with the guide tubes 12 extending through each spacer grid 14.

Each spacer grid 14 is configured to support the nuclear fuel rods 4 by maintaining them in a configuration in which they are spaced apart from one another transversely. The nuclear fuel rods 4 are preferably maintained in position at the nodes of a substantially regular imaginary network.

Each spacer grid 14 comprises for example a plurality of cells, each cell being configured to receive a respective one of the nuclear fuel rods 4, the internal surfaces of the cell being provided with support elements that come into contact with the external surface of the nuclear fuel rod 4 in order to maintain the nuclear fuel rod 4 longitudinally and transversely.

The support elements of each cell comprise for example at least one elastic spring and/or at least one rigid boss. Each spring of a cell is configured to push the nuclear fuel rod 4 into abutment against other spring(s) and/or boss(es) of the cell.

In use, debris present in the coolant flowing through the nuclear fuel assembly 2 may get caught in the nuclear fuel assembly 2 and cause damages to the nuclear fuel assembly 2, in particular to one or several nuclear fuel rods 4 of the nuclear fuel assembly and/or to one or several spacer grids 14 of the nuclear fuel assembly 2.

The nuclear fuel assembly 2 may also be damaged during handling of the nuclear fuel assembly 2, notably upon insertion of the nuclear fuel assembly 2 into the core of the nuclear reactor or upon extraction of the nuclear fuel assembly 2 out of the core of the nuclear reactor.

In particular, a spacer grid 14 of the nuclear fuel assembly 2 may hit a spacer grid 14 of an adjacent nuclear fuel assembly upon insertion of the nuclear fuel assembly 2 into the core of the nuclear reactor or upon extraction of the nuclear fuel assembly 2 out of the core of the nuclear reactor.

During maintenance operation on the nuclear reactor, inspection of the nuclear fuel assembly is preferably conducted to detect defects, such a debris caught in the nuclear fuel assembly 2 or a damage of the nuclear fuel assembly 2.

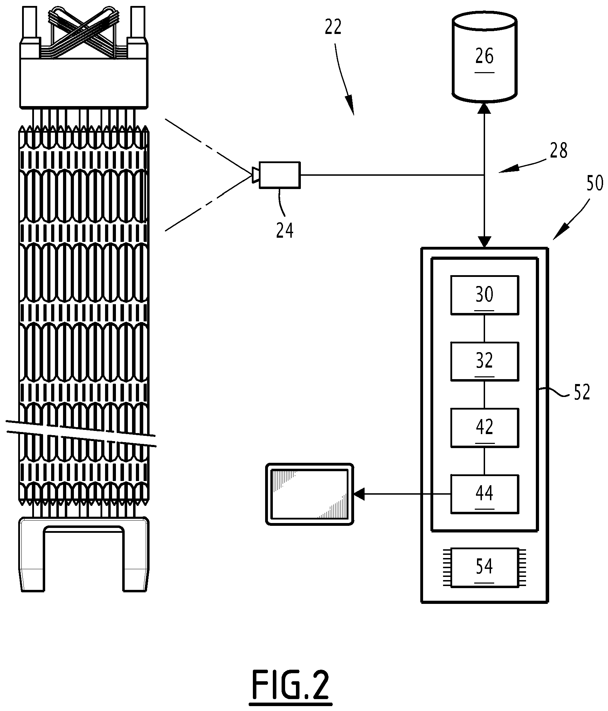

Figure 2 illustrates an electronic inspection system 20 (herein after "inspection system 20") configured to implement an inspection method for the detection of defects affecting a nuclear reactor component.

The inspection system 20 is preferably configured for detecting defects comprising a debris caught on the nuclear reactor component and/or a damage caused to the nuclear reactor component or a part of the nuclear reactor component, due e.g. to an impact.

Damages comprises for example a deformation caused to the nuclear reactor component or a part of the nuclear reactor component or removed material on the nuclear reactor component or a part of the nuclear reactor component, due e.g. to an impact.

The inspection system 20 is for example configured to implement an inspection method for the detection of a defect affecting a nuclear fuel assembly, such as the presence of a debris caught on the nuclear fuel assembly 2 and/or the detection of a damage on the nuclear fuel assembly 2, caused e.g. by debris caught on the nuclear fuel assembly 2 and/or by handling of the nuclear fuel assembly 2.

Damages comprises for example a deformation caused to the nuclear fuel assembly or a part of the nuclear fuel assembly or removed material on the nuclear fuel assembly or a part of the nuclear fuel assembly, due e.g. to an impact.

The inspection system 20 comprises an image capture device 22 configured for capturing digital images.

The image capture device 22 comprises for example a camera 24, which is for example a CCD camera or a CMOS camera.

The image capture device 22 optionally comprises a protection assembly (not shown) for protecting the camera 24 from radiations of the nuclear fuel assembly 2.

As illustrated on Figure 2, the image capture device 22 is configured for capturing an image of a region of interest of the nuclear fuel assembly 2, for example an image of a region of a side face of the nuclear fuel assembly 2.

The image capture device 22 is for example configured for operating underwater and for being controlled remotely, by a human operator or automatically by an electronic control device.

The inspection system 20 optionally comprises a database 26 configured for storing images captured by the image capture device 22.

The image capture device 22 is connected to the database 26 via a communication system 28, e.g. a communication network.

The inspection system 20 comprises an image module 30 configured for obtaining a first image representing a region of interest of the nuclear fuel assembly 2 under inspection.

The image module 30 is configured for example for receiving a first image F1 captured by the image capture device 22 and/or for retrieving a first image F1 from the database 26, the first image F1 being previously captured by the image capture device 22 and stored in the database 26.

The image module 30 is connected to the inspection system 22 and/or to the database via the communication system 28.

The inspection system 22 comprises an autoencoder 34 configured to receive the first image F1 from the image module 30 and to successively compress the first image F1 to produce an image code and to decompress the image code to produce a second image F2.

The image code is a compressed representation of the first image F1 or a "compression" of the first image F1. The second image F2 is a decompression of the image code.

The second image F2 results from the compression of the first image F1 to produce the image code and then the decompression of the image code to obtain the second image F2.

The autoencoder 34 is configured to produce a second image F2 that is close to the first image F1 but that is altered with respect to the first image F1 due to the compression/decompression operated by the autoencoder 34.

The second image F2 represents the region of interest of the nuclear fuel assembly that is represented on the first image F1 but the second image F2 is altered relative to the first image F1 due to the compression/decompression operated by the autoencoder 34.

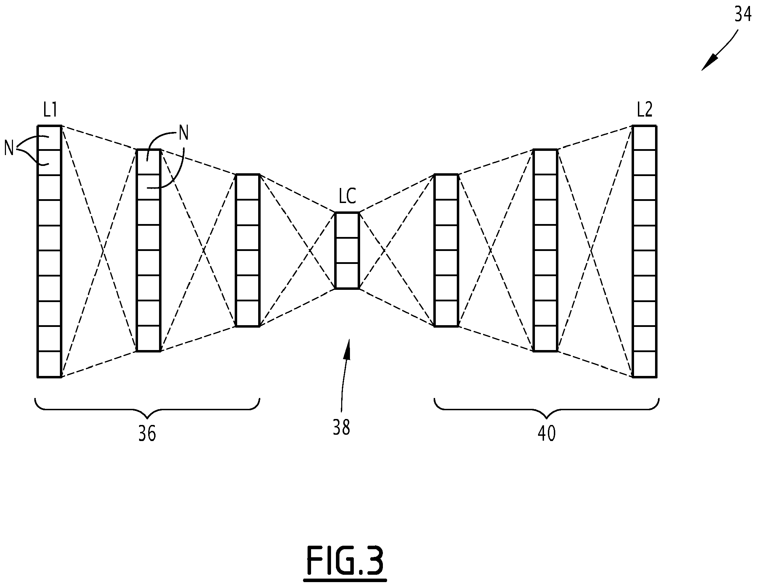

As illustrated on Figure 3, the autoencoder 34 is an artificial neural network in which the nodes define three components processing data successively, including, in this order, an encoder 36, a code 38 and a decoder 40.

The encoder 36 is configured to process the first image F1 to produce the image code that is represented by the code 38, and the decoder 40 is configured to process the image code to produce the second image F2.

The autoencoder 34 is for example a feedforward artificial neural network in which data propagates forward from an input layer L1 to an output layer L2 with passing via hidden layers which include a code layer LC that forms the code 38.

The autoencoder 34 is for example a stacked artificial neural network in which nodes N are organized in successive layers from the input layer L1 to the output layer L2.

Preferably, the successive layers of the autoencoder 34 are fully connected. In such case, each node N of a preceding layer is connected to each node N of the following layer.

The input layer L1 is the first layer of the autoencoder 34 and the output layer L2 is the last layer of the autoencoder 34.

Preferably, the layers of the autoencoder 34 have a decreasing number of nodes N from the input layer L1 to the code layer LC and an increasing number of nodes N from the code layer LC to the output layer L2.

The code layer LC has a number of nodes N that is strictly inferior to the number of nodes N of the input layer L1 and strictly inferior to the number of nodes of the output layer L2.

The ratio between the number of nodes N of the input layer L1 and number of nodes N of the code layer LC somehow corresponds to the rate of compression operated by the autoencoder 34.

The ratio between the number of nodes N of the output layer L2 and number of nodes N of the code layer LC somehow corresponds to the rate of decompression operated by the autoencoder 34.

Preferably, the input layer L1 and the output layer L2 have the same number of nodes N. In such case, the rate of compression and the rate of decompression of the autoencoder 34 are equal.

This allows a comparison between the first image F1 coded on the input layer L1 and the second image F2 coded on the output layer L2, either during implementation of the inspection method or during training of the autoencoder 34.

Preferably, the encoder 36 comprises several layers of nodes N and/or the decoder 40 comprises several layers of nodes N.

In an example, the encoder 36 and the decoder 40 have the same number of layers.

In particular, the layer structure of the autoencoder 34 is for example symmetric with respect to the code layer LC.

In such case, the encoder 36 and the decoder 40 have the same number of layers of nodes N, and each layer of nodes N of the encoder 36 corresponds to a layer of nodes N of the decoder 40 that has the same number of nodes N, with a same number of layers between that layer of nodes N of the encoder 36 and code layer LC and between the corresponding layer of nodes N of the decoder 40 and the code layer LC.

The autoencoder 34 is trained previously to the implementation of the inspection method.

The autoencoder 34 is adapted for performing a self-supervised training as the autoencoder 34 aims at producing a second image F2 that is close to the first image F1, the second image F2 being however slightly altered relative to the first image F1 due to the compression/decompression.

The autoencoder 34 is data specific in the sense that it is only able to meaningfully compress/decompress images it has been trained to process.

The autoencoder 34 is for example trained specifically for the inspection of a specific nuclear reactor component, in particular for the inspection of a nuclear fuel assembly 2.

The autoencoder 34 is for example trained such as to provide meaningful second images F2 allowing to detect defects on a nuclear fuel assembly 2, such a debris caught in the nuclear fuel assembly 2 or a damage on the nuclear fuel assembly 2, including deformation or removed material on a part of the nuclear assembly 2, in particular on a fuel rod 4 of the nuclear fuel assembly 2 or a spacer grid 14 of the nuclear fuel assembly 2.

In the present case, the images are images of a nuclear fuel assembly 2, in particular images of regions of side faces of a nuclear fuel assembly 2.

The autoencoder 34 is trained for example by using backpropagation. For each of a plurality of training input images, the training input image is processed by the autoencoder 34 to produce an output image, the input image and the output image are compared using a loss function and backpropagation is performed to fine tune the output image.

The autoencoder 34 has at least four parameters that possibly influence the results provided by the autoencoder 34 and that need to be set before performing the training.

The four main parameters include the number of nodes N in the code layer LC, the number of layers of the encoder 36 and the number of layers of the decoder 40, the number of nodes N for each layer, and the loss function used for performing the training of the autoencoder 34.

Due to the training of the autoencoder 34 specifically with images of nuclear fuel assemblies, when the nuclear fuel assembly 2 has a defect such as a debris caught in the nuclear fuel assembly or a damage that is represented on the first image F1, the autoencoder 34 tends to produce a second image F2 on which the representation of the defect is mitigated.

The inspection system 22 comprises a comparison module 42 configured for comparing the first image F1 with the second image F2 for detecting the representation of a defect in the first image F1.

The comparison module 42 is for example configured for performing the comparison of the first image F1 with the second image F2 by image differencing.

Image differencing is performed for example with calculating a correlation coefficient between the first image F1 and the second image F2.

The correlation coefficient is calculated for example using a Pearson's correlation coefficient applied to image differencing. A correlation coefficient can be calculated with the following formula:

$$r = \frac{\sum_i (x_i - x_m)(y_i - y_m)}{\sqrt{\sum_i (x_i - x_m)^2}\sqrt{\sum_i (y_i - y_m)^2}}$$

Where

r is the correlation coefficient
$x_i$ is the intensity of the ith pixel in the first image F1
$y_i$ is the intensity of the ith pixel in the second image F2
$x_m$ is the mean intensity of the first image F1
$y_m$ is the mean intensity of the second image F2.

The intensity of each pixel is determined for example using the grey scale.

The comparison module 42 is for example configured the generation of a correlation image F3 in which each pixel corresponds to a pixel of the first image F1 and is assigned a color indicative of the correlation between the pixel of the first image F1 and the corresponding pixel of the second image F2.

The comparison module 42 is for example configured for the automatic detection of a potential representation of a debris in each region of the first image F1 for which the correlation is low, in particular below a correlation threshold.

The comparison module 42 is for example configured for highlighting a detected representation of potential defect, e.g. by generating a modified first image F1.

Highlighting the detected representation of a potential debris is performed for example by changing the colors or placing a visual indicator marker in the image, such as a circle circumventing the detected representation of a potential defect or an arrow pointing on the detected representation of a potential defect.

The inspection system 22 comprises for example a display module 44 configured for displaying the first image F1, the second image F2, the correlation image F3 and/or the first image F1 modified for highlighting a detected representation of a potential defect, on a display 46 for displaying the image(s) to a human operator.

The inspection system 22 comprises a data processing unit 50 that is configured to implement the image module 30, the autoencoder 34, the comparison module 42 and the display module 44.

The image module 30, the autoencoder 34, the comparison module 42 and the display module 44 are for example provided as computer instructions that can be stored in a memory and executed by a processor.

The data processing unit 50 comprises a memory 52 in which the image module 30, the autoencoder 34, the comparison module 42 and the display module 44 are stored and a processor 54 for executing the image module 30, the autoencoder 34, the comparison module 42 and the display module 44.

In a variant, at least one of the image modules 30, the autoencoder 34, the comparison module 42 and the display module 44 is provided as a programmable logic component or an application specific integrated circuit.

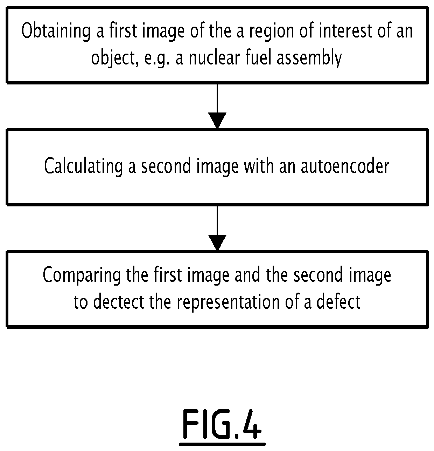

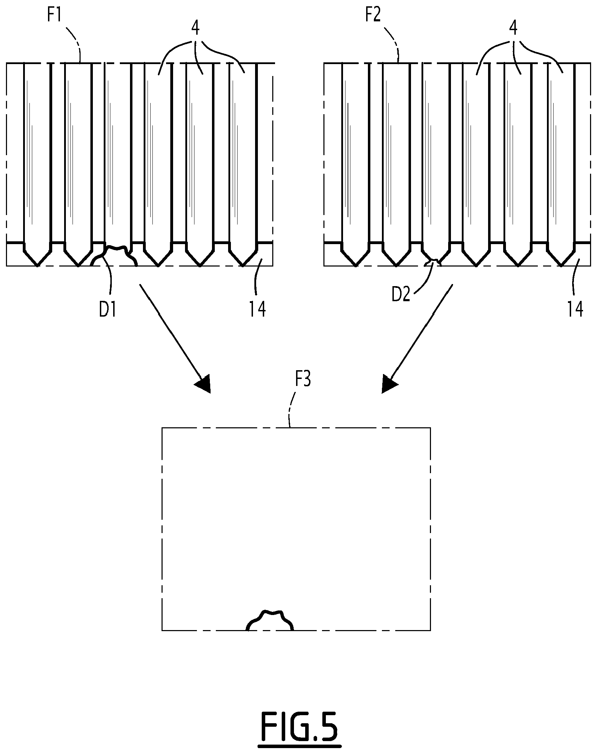

In operation, the inspection system 22 is configured for implementing the inspection method for detecting defects on a nuclear fuel assembly 2 as it will be explained hereinafter with reference to Figures 4 et 5.

The inspection method comprises a step of obtaining a first image F1 of a region of interest of the nuclear fuel assembly 2. The region of interest is for example a region of a side face of the nuclear fuel assembly 2.

The step for obtaining the first image F1 is performed by the image module 30.

In an implementation, the first image F1 is captured by the image capture device 22 and the image module 30 receives the first image F1 from the image capture device 22.

In another implementation, the first image F1 is first captured by the image capture device 22 or any other image capture device and stored in the database 26 and then the first image F1 is obtained by the image module 30 by retrieving the first image F1 from the database 26.

The inspection method comprises a step of inputting the first image F1 to the autoencoder 34 such as to obtain a second image F2, the autoencoder 34 being configured for encoding the first image F1 into the image code FC and decoding the image code FC to output the second image F2.

The inspection method comprises a step of comparing the first image F1 to the second image F2 to detect the representation of a defect on the first image F1. The comparison step is performed by the comparison module 42

The comparison step comprises for example the generation of a correlation image F3 in which each pixel corresponds to a pixel of the first image F1 and is assigned a color indicative of the correlation between the pixel of the first image F1 and the corresponding pixel of the second image F2.

The comparison step comprises for example the detection of a potential representation of a debris in each region of the first image F1 for which the correlation is low, in particular below a correlation threshold.

The comparison step comprises example the generation of a control image corresponding to the first image F1 modified to highlight the detected representation of a potential debris.

The inspection method comprises optionally a step of displaying the first image F1, the second image F2, the correlation image F3 and/or the modified first image F1 onto a display 46 such as to present it to a human operator.

As illustrated on Figure 5, a first image F1 represents a region of interest that is a region of a side face of the nuclear fuel assembly 2. Representations of sections of nuclear fuel rods 4 and an upper edge of a spacer grid 14 are visible on the first image F1.

A first representation D1 of a defect such as a debris caught in the nuclear fuel assembly 2 is visible on the first image F1.

Although the defect is perfectly visible on Figure 5 (which is diagrammatic and only for illustration purposes), the first representation D1 of the defect may be difficult to identify and/or to classify in practice.

A second image F2 is calculated by the autoencoder 34.

The second image F2 is very close to the first image F1 but the autoencoder 34 tends to alter the second image F2 with respect to the first image F1 such that a second representation D2 of the defect on the second image F2 is mitigated with respect to the first representation D1 of the defect on the first image F1.

The comparison of the first image F1 and the second image F2 provides a low correlation between the pixels of the first image F1 and the pixels of the second image F2 specifically in the area of the first representation D1 of the first image F1 and the second representation D2 of the second image F2.

A third image F3 illustrates the correlation between the first image F1 and the second image F2, e.g. by highlighting the pixels for which the correlation is low, in particular below the correlation threshold, e.g. using a color code and/or adding a visual marker.

Owing to the invention, it is possible to detect defects on a nuclear fuel assembly easily and efficiently, by inputting a first image F1 representing a region or interest of a nuclear fuel assembly 2 into the autoencoder 34 to produce a second image F2, and comparing the first image F1 with the second image F2 to detect a representation of a potential defect, in particular a region of low correlation between the pixels of the first image F1 and the pixels of the second image F2.

The inspection method is performed at least in part in an automated manner, the second image F2 and the comparison being performed by an electronic inspection system 22, in particular by the autoencoder 34 and by a comparison module 42.

The result of the comparison can be provided and in particular displayed to a human operator, e.g. for a decision on an intervention on the nuclear fuel assembly.

The human operator can operate the inspection and classify the images more precisely and more efficiently.

The training of the autoencoder 34 is performed easily in a self-supervised manner, with providing images of nuclear fuel assemblies, in particular images with no representation of defects.

The autoencoder 34 is for example trained such that the inspection method implemented using the trained autoencoder 34 allows detection of defects on a nuclear fuel assembly 2, such a a debris caught in the nuclear fuel assembly 2 or a damage on the nuclear fuel assembly 2, including deformation or removed material on a part of the nuclear assembly 2, in particular on a fuel rod 4 of the nuclear fuel assembly 2 and/or a spacer grid 14 of the nuclear fuel assembly 2.

However, the invention is not limited to the examples described and illustrated above. Other examples and variant are possible.

In particular, the invention is not limited to the detection of defects on a nuclear fuel assembly 2.

The invention may be applied more generally to the detection of defects on a component of a nuclear reactor, even more generally to the detection of defects on an object.

The training of the autoencoder 34 will determine the object onto which the inspection method is to be implemented.

A nuclear reactor component refers to a component used in a nuclear reactor. Other components of nuclear reactors onto which the inspection method may advantageously be carried out include for example a nuclear control rod, a core plate, in particular a lower core plate, a steam generator, in particular components of a steam generator, e.g. a tube of the steam generator.

## Claims

1. An inspection method for detecting a defect on a object, in particular a nuclear reactor component, e. g. a nuclear fuel assembly, the inspection method comprising the steps of:

   - obtaining a first image (F1) of a region of interest of the nuclear component;
   - inputting the first image (F1) to an autoencoder (34) configured for encoding the first image (F1) into an image code corresponding to a compression of the first image (F1) and decoding the image code to output a second image (F2); and
   - comparing the first image (F1) with the second image (F2) for detecting the representation of a defect in the first image (F1).

2. The inspection method as recited in claim 1, wherein the comparison of the first image (F1) with the second image (F2) is performed by image differencing.

3. The inspection method as recited in claim 2, wherein image differencing is performed with calculating a correlation coefficient between the first image (F1) and the second image (F2).

4. The inspection method as recited in claim 3, comprising the generation of a correlation image (F3) in which each pixel corresponds to a pixel of the first image (F1) and is assigned a color indicative of a correlation between the pixel of the first image (F1) and the corresponding pixel of the second image (F2).

5. The inspection method as recited in claim 3 or 4, comprising the identification of a potential representation of a defect in each region of the first image (F1) for which the correlation coefficient is low.

6. The inspection method as recited in any one of claims 3-5, comprising the identification of a potential representation of a defect in each region of the first image (F1) for which the correlation coefficient is below a correlation threshold.

7. The inspection method as recited in any one of the preceding claims, the step of obtaining the first image (F1) comprises capturing the first image (F1) using an image capture device (24).

8. An electronic inspection system (22) configured to perform the inspection method as recited in any one of the preceding claims.

9. A computer program comprising instructions which, when the program is executed by a computer, cause the computer to carry out the inspection method as recited in any one of claims 1 - 7.

10. Use of an autoencoder for detecting representations of a defect on a first image (F1) of a region of interest of an object, in particular a nuclear reactor component, e.g. a nuclear fuel assembly (2), by comparing the first image (F1) with a second image (F2) calculated by the autoencoder (34) based on the first image (F1).

$$\underline{\text{FIG.1}}$$

FIG.2

EP 4 276 743 A1

L1    N    N    LC    L2

36    38    40

## FIG.3

Obtaining a first image of the a region of interest of an object, e.g. a nuclear fuel assembly

↓

Calculating a second image with an autoencoder

↓

Comparing the first image and the second image to dectect the representation of a defect

# FIG.4

F1 4 F2 4

D1 14 D2 14

F3

# FIG.5

Europäisches
Patentamt

European
Patent Office

Office européen
des brevets

# EUROPEAN SEARCH REPORT

Application Number

EP 22 30 5713

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2022/020135 A1 (TSUTSUKAWA KAZUKI [JP] ET AL) 20 January 2022 (2022-01-20) | 1-3,7-10 | INV.<br>G06T7/00 |
| Y | * abstract *<br>* paragraphs [0007], [0066] * | 4-6 | |
| X | CHOW J K ET AL: "Anomaly detection of defects on concrete structures with the convolutional autoencoder",<br>ADVANCED ENGINEERING INFORMATICS,<br>ELSEVIER, AMSTERDAM, NL,<br>vol. 45, 28 April 2020 (2020-04-28),<br>XP086225307,<br>ISSN: 1474-0346, DOI:<br>10.1016/J.AEI.2020.101105<br>[retrieved on 2020-04-28] | 1,2,7-10 | |
| Y | * abstract; figure 5 *<br>* sections "3. Methodology", "4.2. Image dataset" * | 4-6 | |

TECHNICAL FIELDS
SEARCHED       (IPC)

G06T

The present search report has been drawn up for all claims

| Place of search | Date of completion of the search | Examiner |
|---|---|---|
| Munich | 17 November 2022 | Eckert, Lars |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

...............................................................................

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 22 30 5713

This annex lists the patent family members relating to the patent documents cited in the above-mentioned European search report.
The members are as contained in the European Patent Office EDP file on
The European Patent Office is in no way liable for these particulars which are merely given for the purpose of information.

17-11-2022

| Patent document cited in search report | | Publication date | Patent family member(s) | | Publication date |
|---|---|---|---|---|---|
| US 2022020135 | A1 | 20-01-2022 | CN 113016023 | A | 22-06-2021 |
| | | | JP 7008843 | B2 | 25-01-2022 |
| | | | JP WO2020110629 | A1 | 21-10-2021 |
| | | | KR 20210084576 | A | 07-07-2021 |
| | | | TW 202020802 | A | 01-06-2020 |
| | | | US 2022020135 | A1 | 20-01-2022 |
| | | | WO 2020110224 | A1 | 04-06-2020 |
| | | | WO 2020110629 | A1 | 04-06-2020 |

EPO FORM P0459

For more details about this annex : see Official Journal of the European Patent Office, No. 12/82